# EUROPEAN PATENT SPECIFICATION

(11) **EP 4 054 852 B1**
(45) Date of publication and mention of the grant of the patent: **15.01.2025**
(21) Application number: 20702757.4
(22) Date of filing: 27.01.2020
(51) Int. Cl.: B42D 25/309, B42D 25/351

(54) **DOCUMENT OF IDENTIFICATION WITH OPTICAL LIGHTGUIDE**
IDENTIFIKATIONSDOKUMENT MIT OPTISCHEM LICHTLEITER
DOCUMENT D'IDENTIFICATION AVEC GUIDE DE LUMIÈRE OPTIQUE

(43) Date of publication of application: 14.09.2022
(73) Proprietor: Orell Füssli AG, 8003 Zürich (CH)
(72) Inventor: EICHENBERGER, Martin, 8702 Zollikon (CH); BASSET, Guillaume, 68330 Huningue (FR)
(74) Representative: E. Blum & Co. AG
(86) International application number: PCT/EP2020/051881
(87) International publication number: WO 2021/151460

(56) References cited:
- WO-A1-2017/148704
- WO-A1-2018/161180
- US-A1- 2014 355 298

## Description

### Technical Field

The invention relates to a document of identification having a personalized area carrying information identifying an owner of the document, such as name data, date and/or place of birth, a photograph, and/or an electronic data carrier carrying identification data of the owner.

### Background Art

Documents of identification of this type have been known e.g. from EP 0364730 or US 2003/0129345.

WO 2018/161180 describes a carrier representing a monetary value. It has a display device where e.g. the image of an owner of the carrier can be shown. The display device can be backlit from a light guide, which has a surface grating for illuminating the display device.

It has been known to cover the personalized area of such documents by means of a security foil e.g. carrying an embossing or a hologram for generating optical effects and for protecting the personalized information from tampering.

### Disclosure of the Invention

The problem to be solved by the present invention is to improve the protection of at least part of the personalized area.

This problem is solved by the document of identification of claim 1.

Accordingly, the document of identification comprises
- A personalized area: This area carries information identifying the owner of the document, such as name data (which may include the name and/or the signature), date and/or place of birth, a data carrier with personalized information, and/or a photograph.
- An optical lightguide comprising a primary incoupler and a primary outcoupler: The primary incoupler and the primary outcoupler are advantageously structured such that light can be coupled into the lightguide (directly or via a fluorescent process) at the primary incoupler and that light guided by the lightguide
can be coupled out (directly or via a fluorescent process) at the primary outcoupler. The lightguide forms a protective area between the primary incoupler and the primary outcoupler, and this protective area overlaps with at least part of the personalized area.

If a counterfeiter has tried to access the personalized area through the lightguide, the protective area is likely damaged, and this can be detected by coupling light into the primary incoupler and checking for the presence of the light at the primary outcoupler.

The lightguide, and in particular its protective area, may therefore form an anti-tampering seal for at least part of the personalized area.

The term "overlaps with" is to be understood that at least part of the protective area is arranged above or below the personalized area and overlaps with personalized information on the personalized area.

The terms "above" and "top" designate the surface of the document on which the personalized information is visible. If this information is visible from both surfaces of the document, the top surface designates one of these surfaces, advantageously the one where more of the personalized information is visible.

The terms "below" and "bottom" designate the surface of the document opposite to the top surface, i.e. the bottom surface is below the top surface and the top surface is above the bottom surface.

The top and bottom surfaces should advantageously be understood for passports as the surfaces of the data page or of the data pages containing personal information.

Advantageously, the lightguide extends fully across the personalized area. Advantageously, it can extend at least from a first lateral side to a second lateral side of the document. In this context, "lateral" designates any direction perpendicular to the top-bottom-direction.

The primary incoupler is located laterally at a first side of the personalized area. This means that at least part of the primary incoupler is arranged outside (i.e. non-overlapping with) the personalized area. Advantageously, it may be arranged:
- laterally outside a first edge of the personalized area (i.e. it is arranged outside the personalized area and does not overlap with the first edge of the personalized area), or
- overlapping with the first edge of the personalized area.

In both cases, the "first edge" is an edge of the personalized area at the first side.

Similarly, the primary outcoupler may be located laterally at a second side of the personalized area. This means that at least part of the primary outcoupler is arranged outside (i.e. non-overlapping with) the personalized area. Advantageously, it may be arranged:
- laterally outside a second edge of the personalized area (i.e. it is arranged outside the personalized area and does not overlap with the second edge of the personalized area), or
- overlapping with the second edge of the personalized area.

In both cases, the "second edge" is an edge of the personalized area at the second side.

Advantageously, and when combining these embodiments, the first side is different from the second side such that the lightguide between the primary incoupler and the primary outcoupler extends across the personalized area between these sides.

In particular, the first side is arranged opposite to the second side, which allows the lightguide to protect a whole diametrical section of the personalized area.

In one type of embodiment, the primary incoupler and/or outcoupler may be located in (i.e. overlapping with) the personalized area. It may even fully be located within the personalized area.

If the primary outcoupler and/or outcoupler overlaps at least partially with the personalized area and/or is located fully within the personalized area, it becomes harder to simply cover the personalized area with a fake personalized information carrier, such as a fake photograph.

The overlap of the primary incoupler and/or primary outcoupler with the personalized area is advantageously small in order not to obstruct the view onto the personalized area. Hence, the primary incoupler and/or the primary outcoupler overlap with no more than 20%, in particular with no more than 10%, of the personalized area. Advantageously, the primary incoupler and/or the primary outcoupler do not overlap with the personalized area at all.

In one embodiment, the lightguide comprises no incoupling and/or no outcoupling structures in the personalized and/or protective area, i.e. there are no structures within the personalized and/or protective area for coupling light into the lightguide and/or for coupling light out of the lightguide. This provides an unobstructed view onto the personalized area at the location of the protective area and may render the lightguide at this location substantially invisible. However such a configuration still provides a protective area overlapping with the personalized area as attempts to access the personalized area through the lightguide (i.e. in the overlapping area) would impact the light-guiding properties of the lightguide.

In another embodiment, the lightguide may comprise, in the protective area, a secondary outcoupling structure (in addition to the primary outcoupler). The secondary outcoupling structure fulfils the following conditions:
- It covers no more than 20%, in particular no more that 10%, of said protective area; and
- For any point in the protective area, a shortest distance d to said secondary outcoupler is less than L/3. In this context, L is the extension of the protective area in the direction between the primary incoupler and the primary outcoupler.

These two conditions ensure that the secondary outcoupling structure uses a comparatively small part of the protective area but is, in some sense, distributed over the area, a combination which is termed a 'sparse' outcoupler herein. Such a sparse outcoupler allows to protect a comparatively large area with a small outcoupler coverage. In contrast to this, the primary outcoupler may be concentrated and dense, which makes it well visible but also poorly suited for covering a larger area.

In one embodiment, in the personalized area, the protective area overlaps with at least one of the following information carriers:
- writing with name data of an owner of the document,
- writing with a date of birth of an owner of the document,
- a photograph of the owner of the document, and/or
- an electronic data carrier carrying identification data of the owner.

Advantageously, the protective area overlaps with several of these information carriers.

Advantageously, the protective area fully overlaps at least one such information carrier, i.e. on at least one side, the information carrier is fully backed by the protective area such that the information carrier is completely inaccessible.

The lightguide may be arranged below or above the personalized area, with "below" and "above" as defined above. This allows to make access to the personalized area harder from the given side.

The document may also comprise a first lightguide arranged above the personalized area and a second lightguide arranged below the personalized area, in which case the personalized area may be protected from both sides.

The document may e.g. be a passport or a part thereof, or it may be an identification card, access card, etc.

### Brief Description of the Drawings

The invention will be better understood and objects other than those set forth above will become apparent when consideration is given to the following detailed description thereof. Such description makes reference to the annexed drawings, wherein:
Fig. 1 is a top view of a first embodiment of a document of identification,
Fig. 2 is a sectional view (not true to scale) along line II-II of Fig. 1,
Fig. 3 is a sectional view of a second embodiment,
Fig. 4 is a sectional view of a third embodiment,
Fig. 5 is a top view of a fourth embodiment of a document of identification,
Fig. 6 is a top view of a fifth embodiment of a document of identification with a secondary primary outcoupler,
Fig. 7 shows a close-up view of the secondary primary outcoupler of Fig. 6,
Fig. 8 shows a top view of a sixth embodiment of a document of identification,
Fig. 9 shows a top view of a sixth embodiment of a document of identification with windows, and
Fig. 10 shows a sectional view (not to scale) along line X-X of Fig. 9.

### Modes for Carrying Out the Invention

### First embodiment and general aspects

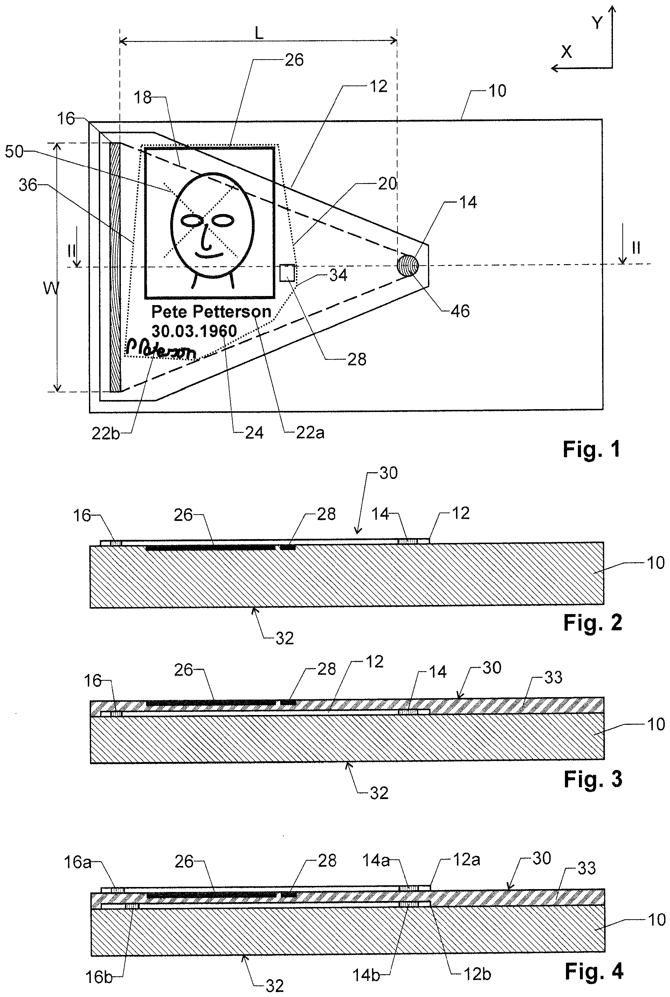

Figs. 1 and 2 show a first embodiment of an identification document. The identification document comprises a carrier 10, which can e.g. be of paper and/or plastics. It may be flexible or rigid.

The identification document shown in Figs. 1 and 2 may e.g. be a credit-card-sized ID card, a personalized access card, or it may be the personalized page of a passport.

Carrier 10 may carry visible markings, in particular printed markings, such as writing or graphical elements, as well as any suitable security features. In addition, carrier 10 carries at least one lightguide 12, which can for example be a film of transparent plastics. In general, the lightguide is a thin, substantially 2-dimensionnal film, patch of films, or stripe of films or a layer of material having a low aspect ratio and whose 2D shape can vary. The lightguide thickness is preferably thinner than 1mm, in particular thinner than 200 microns, advantageously thinner than 50 microns.

In general, the ID document may carry other security features, visible or invisible, such features possibly relying on their small dimensions, optical properties, electronics properties, and tactile properties. Such security features may be applied to or integrated in carrier 10, or they may be part of or be formed by other thin foils, paper or plastic substrates, or other parts of the ID document.

Plastics material is meant to include plastics, reinforced plastic, composite plastics, plastics containing additives, plastic loaded with nanoparticles, microfibers, taggants and the like, cross-linked organic material such as cross-linkable lacquers, hybrid polymer/organic and organic/inorganic matrix materials and the likes, as well as layered films, and do not restrict only to film made of a single polymer.

The film may for example have a core having a high refractive index and coatings, on one or both sides of the core, of lower refractive index, thereby preventing the guided light from being coupled out or attenuated by structures adjacent to the lightguide.

The lower refractive index coatings can be considered as a cladding layer to the core. The core refractive index has advantageously a refractive index higher than 0.05 with respect to the lower refractive index, more advantageously higher by at least 0.1, and even more preferably higher by at least 0.15. In an example, the core may have a refractive index in a given part of the visible spectrum of 1.55 and the cladding 1.4, in another example the core has a refractive index of 1.6 and the cladding of 1.44.

Lightguide 12 is advantageously light guiding for at least one wavelength in a spectral range between 400 and 1000 nm.

Lightguide 12 further comprises a primary incoupler 14 and a primary outcoupler 16.

Primary incoupler 14 may for example be a diffractive grating and/or microlenses. It may be embossed on a surface of lightguide 12, such as on a dedicated surface layer of lightguide 12, and/or embedded within lightguide 12. Alternatively, it may also be formed by a scattering, and/or micro-reflecting and/or fluorescent region of lightguide 12.

Similarly, primary outcoupler 16 may be embossed on a surface of lightguide 12 and/or embedded within lightguide 12. Alternatively, it may also be formed by an edge of lightguide 12 or by a scattering, diffusing, or fluorescent region of lightguide 12. Such outcoupler may be realized by additive processes, subtractive processes, material modification processes, such as laser irradiation, or by printing a material onto the lightguide that scatters the guided light or fluorescent material that is excited to fluorescence by the guided light.

Both incoupler 14 and outcoupler 16 may be adapted to respectively incouple/outcouple light from/to one of the two sides or from/to both sides of lightguide 12. The observation of the outcoupled light can be designed to be on the illumination side or to the opposite side with respect to the illumination side.

The area where the light is guided in lightguide 12 between primary incoupler 14 and primary outcoupler 16 is called the "protective area" 18.

Identification document 10 further has a personalized area 20, which designates an area of the identification document that carries personalized information of the document's owner.

Personalized area 20 may e.g. be defined as the convex hull of all or some areas comprising such personalized information. Alternatively, it may e.g. be defined as the area covered by such personalized information.

In particular, the personalized area may comprise one or more of the following information carriers:
- Writing representing name data of the owner of the document. In particular, such writing may include the owner's name 22a and/or signature 22b.
- Writing 24 with a date and/or place of birth of the owner of the document,
- A photograph 26 of the owner of the document.
- An electronic data carrier 28 carrying identification data of the owner. Data carrier 28 is advantageously a memory chip storing individualized data pertinent to the owner, such as name data, biographic data, and/or biometric data. Such a memory chip may be connected to a suitable wireless or wire-bound interface. It can e.g. be an RFID chip. The chip with antenna may be integrated in the data page or in the cover page of passports.
- A unique ID number and/or a personalized machine-readable zone (MRZ). A machine-readable zone may e.g. be encoded in plain text and/or in machine-specific (i.e. only machine-readable) encoding (e.g. in barcode or datamatrix, such as QR-code)

### Function

In general, lightguide 12 may be operated by shining light into primary incoupler 14. At least part of the light is coupled into lightguide 12 and propagates through protective area 18. At least part of the light is then coupled out at primary outcoupler 16.

If the lightguide is undamaged, all or part of the primary outcoupler 16 will light up.

If any part of protective area 18 has been damaged, some light will typically fail to arrive at primary outcoupler 16 and give rise to a darker area there, which allows to detect the presence of the damage. A darker area designates an area providing less outcoupled light when light is shined on the incoupler, and may however appear white or clear in color due to a white or clear background. In addition or alternatively thereto, such a damage may act as an outcoupler of its own, which leads to an unexpected bright area in protective area 18, which again can be used to detect the presence of the damage.

The overlap between protective area 18 and personalized area 20 should be large enough to effectively cover a macroscopic part of personalized area 20. Hence, the overlap between protective area 18 and the personalized information 22a, 22b, 24, 16, 28 in protective area 20 is advantageously at least 1 cm², in particular at least 2 cm².

In order to be able to protect a macroscopic region, the distance between primary incoupler 14 and primary outcoupler 16 should be large. Hence, in a direction X between primary incoupler 14 and primary outcoupler 16, protective area 18 advantageously has an extension L of at least 1 cm, in particular of at least 2 cm.

Advantageously, the extension of primary outcoupler 16 should be large enough to monitor a wide section of the personalized information 22 - 28. Hence, in a direction Y perpendicular to direction X, primary outcoupler 16 has an extension W of at least 1 cm, in particular of at least 2 cm

### Vertical placement

As seen in Fig. 2, lightguide 12 may, in one embodiment, cover the personalized information, such as the writing 22a, 22b, and/or 24, the photograph 26, and/or the data carrier 28, i.e. it is arranged above the personalized information. Thereby, it renders it difficult to gain access to said information from the top side 30 of the identification document, effectively securing the personalized information.

In another embodiment, which is shown in Fig. 3, lightguide 12 may be arranged below the personalized information, such as the writing 22a, 22b, and/or 24, the photograph 26, and/or the data carrier 28. Thereby, it renders it difficult to gain access to said information from the bottom side 32 of the identification document. In that case, a transparent layer 33 may e.g. be provided above primary incoupler 14 and primary outcoupler 16 and, optionally, between the personalized information 22 - 28 and lightguide 12. This makes it very difficult to access the personalized information by cutting attacks attempting to split apart the document to access the personalized information, such as the ink marking or photography, as well as attacks from the back of the document or from the back of the datapage, such as grinding attacks.

In yet another embodiment, which is shown in Fig. 4, the identification document comprises a first lightguide 12a arranged above the personalized information, such as the writing 22a, 22b, and/or 24, the photograph 26, and/or the data carrier 28. It also comprises a second lightguide 12b arranged below the personalized information 22 - 28. These two lightguides block access to the personalized information from the top side 30 as well as from the bottom side 32.

As shown, a transparent layer 33 may e.g. be arranged between the first and second primary lightguides 12a, 12b.

In this embodiment the primary incouplers 14a, 14b of the first and the second lightguides 12a, 12b may overlap, which makes it easier to couple light into both lightguides 12a, 12b with a single light source. For example, the two primary incouplers 14a, 14b have the same size and be centered above each other.

The primary outcouplers 16a, 16b of the first and the second lightguides 12a, 12b, however, advantageously have at least one non-overlapping area having a large extension along direction Y, in particular of at least 1 cm, in particular of at least 2 cm. This allows to separately monitor the integrity of the protective areas 18 of the two lightguides 12a, 12b when both are illuminated at the same time.

In the embodiment of Fig. 4, this is achieved by the two primary outcouplers 16a, 16b being parallel to each other and offset in respect to each other.

Advantageously, the primary outcouplers 16a, 16b of the first and the second lightguides 12a, 12b have complementary shapes located adjacent to each other when viewed from above or from below.

### Horizontal placement

In the embodiments of Figs. 1 - 4, primary incoupler 14 and primary outcoupler 16 are both arranged laterally outside personalized area 20.

In particular, primary incoupler 14 is arranged laterally outside a first edge 34 on a first side of personalized area 20, i.e. it does not overlap with any part of the personalized information 22 - 28 in personalized area 20.

Similarly, primary outcoupler 16 is arranged laterally outside a second edge 36 on a second side of personalized area 20, i.e. it does not overlap with any part of the personalized information 22 - 28 in personalized area 20.

Edges 34 and 36 may be opposite to each other.

However, primary incoupler 14 and/or primary outcoupler 16 may also overlap with personalized area 20, in particular with the personalized information 22 - 28 in personalized area 20.

Said overlap is advantageously small in order to prevent primary incoupler 14 and/or primary outcoupler 16 from affecting the visibility of the personalized information. Hence, advantageously, primary incoupler 14 and/or primary outcoupler 16 overlap with no more than 20%, in particular with no more than 10%, of the personalized area 20, in particular of the area of the personalized information 22 - 28.

Advantageously, though, in this case, primary incoupler 14 and/or primary outcoupler 16 is/are not arranged completely within personalized area 20 but overlap with an edge 34, 36 thereof.

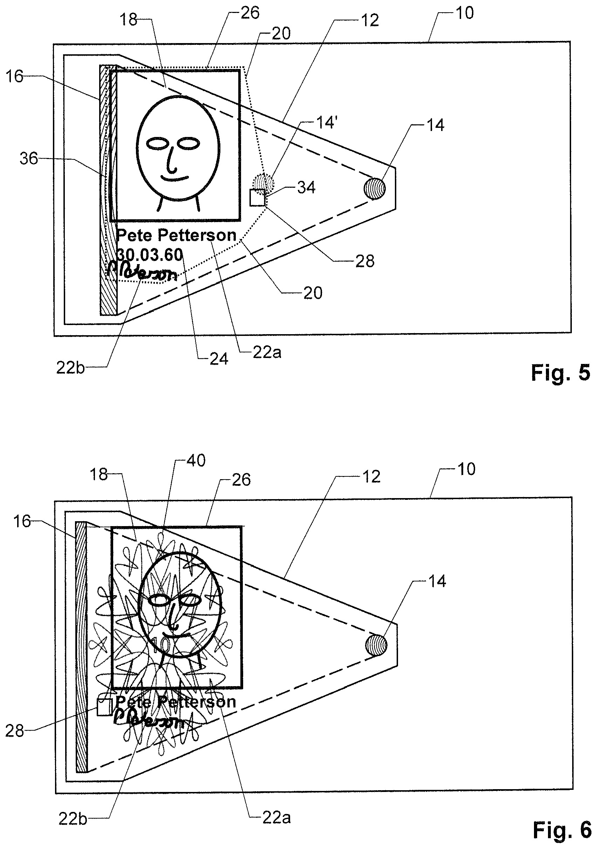

Fig. 5 shows an example where primary outcoupler 16 overlaps edge 36 of personalized area 36 as well as an edge of at least one of the personalized information 22 - 28.

Similarly, and in addition or alternatively thereto, incoupler 14 may at least partially overlap personalized area 20, and in particular at least one of the personalized information 22 - 28, as indicated by a dotted primary incoupler 14' in Fig. 5.

### Secondary outcoupler

In the embodiments shown so far, there are no incoupling or outcoupling structures within protective area 18. This renders protective area 18 basically invisible, which provides excellent visibility of the information in personalized area 20.

In another embodiment, though, lightguide 12 may comprise a secondary outcoupling structure 40, in addition to primary outcoupler 16, which is also able to couple light out from lightguide 12. This secondary outcoupling structure 40 may be arranged in protective area 18, as illustrated in Fig. 6.

In that case, however, secondary outcoupling structure 40 is advantageously sparse, as defined above, in order to prevent a large loss of guided light in protective area 18 and/or to not obstruct the personalized information 22 - 28. In other words, outcoupling structure 16 covers no more than 20%, in particular no more than 10%, of protective area 18.

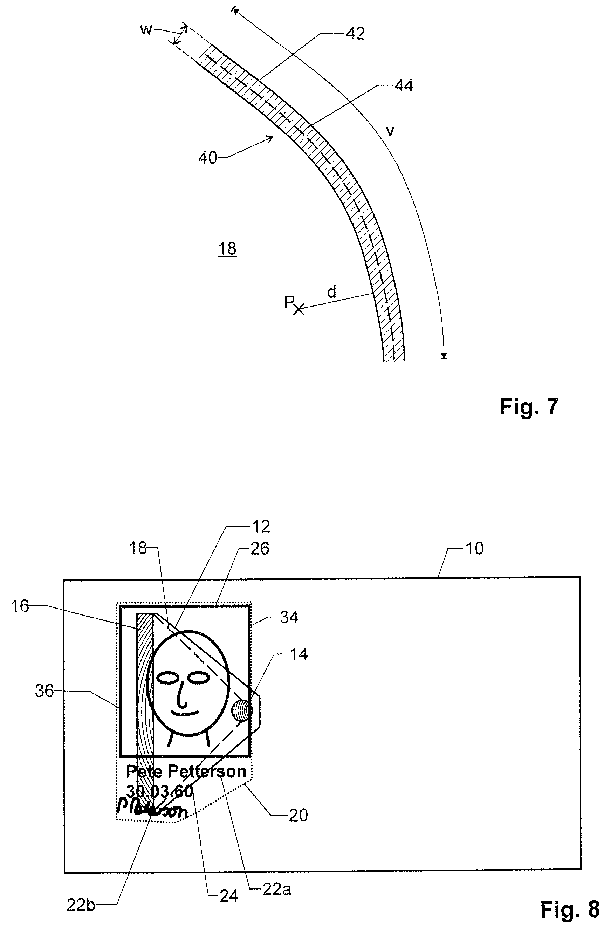

In addition, and as illustrated in Fig. 7, any point P within protective area 18 should be close to at least part of outcoupling structure 16. Advantageously, any such point P has a distance d of less than L/3, in particular of less than L/4, in particular less than L/5, in particular less than L/10, from the closest part of secondary outcoupling structure 40.

This design ensures that no point P on protective area 18 is far away from secondary outcoupling structure 16. Hence, any attempt to counterfeit or forge a macroscopic region of the identity document, for example, such as by removing lightguide 12 locally, splitting it apart from the document, drilling holes through it, locally grinding the document in the protective area and so on is likely to destroy at least part of secondary outcoupling structure 40. This can be detected easily by sending light into lightguide 12 by means of primary incoupler 14 and by optically verifying secondary outcoupling structure 40.

Primary and/or secondary outcoupling structure 16, 40 may comprise at least one line-shaped element 42. In this context, 'line-shaped' means that the line-shaped element 42 extends along straight or curved line as e.g. shown in Fig. 7. Using line-shaped elements has the advantage that they are easily recognized by the eye without requiring a large amount of light.

For example, primary and/or secondary outcoupling structure 16, 40 may form a guilloche pattern.

Line-shaped element 42 has a width w (perpendicular to its longitudinal direction) that is much smaller than its length v (along its longitudinal direction). Advantageously, length v is at least 5 mm, in particular at least 10 mm, and/or width w is no more than 1 mm, in particular no more than 0.5 mm, in particular no more than 0.2 mm.

On the other hand, though, width w is advantageously at least 0.05 mm, advantageously at least 0.1 mm, in order to make the outcoupler well visible to the unaided eye.

Advantageously, there is a plurality of such line-shaped outcouplers, in particular at least 5, in particular at least 10, in particular at least 100, which allows to distribute them over the protective area for better protection and visual detection.

The shape of the primary and/or secondary outcoupling structure 16, 40 may vary. The may e.g. also form dots, symbols, characters, etc.

Fig. 7 also shows, in enlarged fashion, a diffractive grating 44 that can be used to couple light out from lightguide 12.

Advantageously, secondary outcoupling structure 40 overlaps with at least part of the personalized information 22 - 28.

### Windows

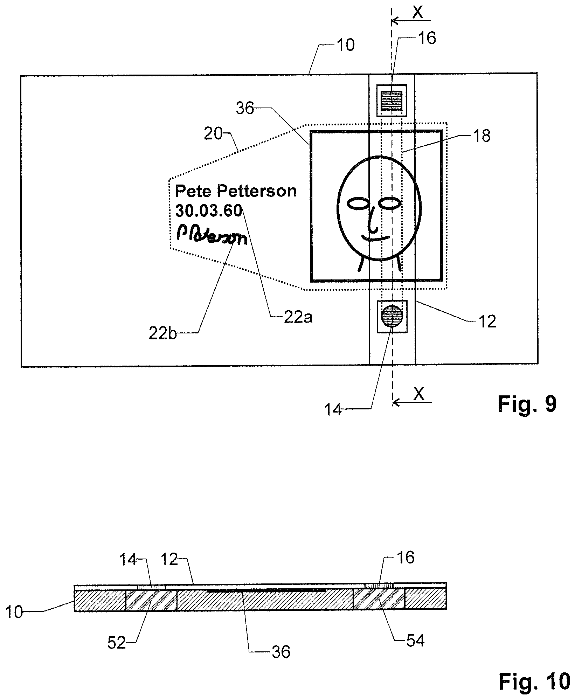

Figs. 9 and 10 show an embodiment where primary incoupler 14 and/or primary outcoupler 16 is/are arranged at windows 52, 54 of the document.

These windows 52, 54 are designed to be transparent for at least one wavelength that is coupled in/out by primary incoupler 14 and primary outcoupler 16, respectively. In this context, "transparent" advantageously designates that at least 25%, in particular at least 50%, in particular at least 75%, of the light at said wavelength are transmitted through carrier 10 at the location of the window, advantageously without being scattered.

This has the advantage that light may be coupled in from the top or the bottom of the document, at primary incoupler 14 and/or at primary outcoupler 16.

In the embodiment of Fig. 9, two such windows 52, 54 are provided, with first window 52 being located at primary incoupler 14 and second window 54 being located at primary outcoupler 16.

However, there may also be only one such window, e.g. at the location of primary incoupler 14, which would allow to place the document on a light source and illuminate it from below, with light going through first window 52 and being incoupled at primary incoupler 14 and then being seen, from above, at primary outcoupler 16 (or at any secondary outcoupling structure 40 as mentioned above).

Protective area 18 again may cover at least part of personalized area 20, such as e.g. photograph 36 as shown.

### Notes

The identification document may comprise further document-specific information outside personalized area 20. In particular, a unique number of the identification document, such as a passport number, may be arranged outside personalized area 20. Even some personalized information may be arranged outside personalized area 20, in which case the lightguide only protects the personalized information it covers at least partially.

However, advantageously, personalized area 20 at least includes any photograph 26 of the owner and at least one instance of the name data 22a, 22b of the owner, and preferably also any data carrier 28 with owner-specific information.

In order to distribute the light from a single light source over a large protective area 18, primary incoupler 14 advantageously spreads the light it couples into lightguide 12. Advantageously, it is structured to generate a fan of light in lightguide 10 that has an angular width of at least 20°, advantageously at least 30°. In this context, the width of the fan is defined by the angular range over which the guided light varies within 50% of the maximum intensity.

Such light fanning can e.g. be achieved by structuring primary incoupler 14 as a curved diffraction grating 46 as illustrated (not to scale) in Fig. 1. It can also be achieved by selecting a coupler having a broad acceptance angle and a non-collimated light source such as a LED, for example the LED flash of a smartphone back-camera.

In addition or alternatively thereto, primary incoupler 14 advantageously spreads the light it couples into lightguide 12 to illuminate all of the extension W of primary outcoupler 16 (which is e.g. the extension along direction Y in Fig. 1) with a variation of intensity of 50% or less over the whole extension W.

In the embodiment of Fig. 1 protective area 18 covers all of the writing for name data 22a, 22b, the writing 24 for date of birth, and the data carrier 28. However, it only covers part of photograph 26.

In general, protective area 18 advantageously overlaps with all or at least 50%, in particular at least 75% of every personalized information in personalized area 20. For example, it may cover photograph 26 fully and/or any other personalized information only partially.

Primary incoupler 14 and/or primary outcoupler 16 may be adapted to respectively in/out couple light from/to below document, provided the carrier 10 is at least partially transparent in the area where the primary outcoupler and/or primary outcoupler is located. The observation of the outcoupled light can be designed to be on the illumination side or on the opposite side with respect to the illumination side with respect to the document of identification.

The outcoupler can be made of a fluorescent region, preferably a fluorescent region that is non-homogeneous in color or design. Advantageously the fluorescent outcoupler material is designed to have low absorption in the visible range if located in the personalized area, so that it does not obstruct the reading of the personalized area when no light is shined on the primary incoupler 14, i.e. into the lightguide.

The primary outcoupler structure 16 may represent at least part of the portrait of the owner of the identification document. In other words, outcoupler structure 16 is personalized to the user, which makes the security feature even harder to fake and easier to verify. This can be realized by additive processes, subtractive processes, material modification processes, such as laser irradiation, or by printing a material onto the lightguide that scatters the guided light or fluorescent material that is excited to fluorescence by the guided light. As an example, a fluorescent portrait of the owner of the identification document may be printed such as it become visible when illumination light is shined on the primary incoupler 14.

The lightguide may contain several incouplers arranged to couple light into the lightguide and towards the protective area with different main propagation direction or with different spectral composition, i.e. color.

The primary incoupler 14 may be elongated macroscopically and substantially parallel to one edge of the protective area to provide multiple illumination axes into the lightguide or an easier incoupler to light-source alignment.

In the embodiments above, neither primary incoupler 14 nor primary outcoupler 16 are completely arranged within the personalized area 20.

Fig. 8, in contrast thereto, shows an embodiment where with primary incoupler 14 and primary outcoupler 16 are arranged completely within personalized area 20.

Alternatively, only one of them (i.e. only the incoupler or the outcoupler) could be located completely within personalized area 20 while the other one may be located overlapping with an edge of personalized area 20 or completely outside personalized area.

Protective area 18 may comprise at least one further visual security element, in addition to the outcoupler structures. Such a security element 50 is shown, by way of example, as a dotted cross in Fig. 1. This further security document is visible in reflection, i.e. by shining light onto the lightguide without coupling it into the lightguide. It renders it difficult to place e.g. a false photograph or another counterfeiting element on top of the lightguide without being detected. Alternatively such a further security element may be controlled in transmission. Such a further visual security element may e.g. be at least one of an optically variable device, such as a diffractive structure, and non-variable markings, such as printed markings.

Lightguide 10 may be a foil manufactured apart from carrier 10 and then laminated thereto, or it may also be formed in-situ on carrier 10.

Any incoupler and/or outcoupler mentioned herein may e.g. be a diffractive incoupler/outcoupler, a fluorescent incoupler/outcoupler, an Infrared Up-converting incoupler/outcoupler, an incoupler/outcoupler based on microscopic surface structures (i.e. surface structures without diffractive effects, such as microlenses or micro mirrors or surface structures having a lateral repetition period (i.e. a repetition period within the plane of the lightguide) of e.g. at least 10 µm), diffusing or scattering structures or materials.

The primary incoupler may also be placed e.g. between two ends of the lightguide, e.g. with two protective areas on different, in particular opposite, sides of it.

As illustrated by way of example in Figs. 9 and 10, lightguide 12 may (for any embodiments) be strip-shaped, with a length much larger, in particular at least five times larger, than its width, and advantageously with a constant width along its whole length. It may extend across the whole document, i.e. from one of its edges to the opposite edge.

While there are shown and described presently preferred embodiments of the invention, it is to be distinctly understood that the invention is not limited thereto but may be otherwise variously embodied and practiced within the scope of the following claims.

## Claims

1. A document of identification having
a personalized area (20) carrying personalized information (22 - 28) identifying an owner of the document and
an optical lightguide (12) comprising a primary incoupler (14) and a primary outcoupler (16),
wherein the lightguide (12) forms a protective area (18) between said primary incoupler (14) and said primary outcoupler (16), wherein said protective area (18) overlaps with at least part of said personalized area (20)
**characterized in that** said primary incoupler (14) is located laterally at a first side of said personalized area (20).

2. The document of claim 1 wherein said lightguide (12) is arranged below said personalized area (20).

3. The document of claim 1 wherein said lightguide (12) is arranged above said personalized area (20).

4. The document of any of the preceding claims wherein said lightguide (12) extends fully across said personalized area (20).

5. The document of any of the preceding claims wherein the primary incoupler (14) is arranged
- laterally outside a first edge (34) of the personalized area (20), or
- overlapping with the first edge (34) of the personalized area (20),
wherein said first edge (34) is an edge of the personalized area (20) at said first side.

6. The document of any of the preceding claims wherein said primary outcoupler (16) is located laterally at a second side of said personalized area (20).

7. The document of claim 6 wherein the primary outcoupler (16) is arranged
- laterally outside a second edge (36) of the personalized area (20), or
- overlapping with the second edge (36) of the personalized area (20),
wherein said second edge (36) is an edge of the personalized area (20) at said second side.

8. The document of any of the claims 4 or 5 and of any of the claims 6 or 7, wherein said first side is different from said second side, and particular wherein said first side is opposite to said second side.

9. The document of any of the preceding claims wherein said primary incoupler (14) and/or said primary outcoupler (16) overlap with no more than 20%, in particular with no more than 10%, of the personalized area (20).

10. The document of any of the preceding claims wherein said primary incoupler (14) and/or said primary outcoupler (16) does/do not overlap with the personalized area (20).

11. The document of any of the preceding claims wherein the lightguide (12) comprises, in said protective area (18) and/or said personalized area (20), no incoupling and/or no outcoupling structures.

12. The document of any of the preceding claims wherein the lightguide (12) comprises a secondary outcoupling structure (40) in said protective area (18), wherein
- said secondary outcoupling structure (40) covers no more than 20%, in particular no more that 10%, of said protective area (18) and
- for any point (P) in said protective area (18), a shortest distance (d) to said secondary outcoupler (40) is less than L/3, wherein L is an extension of said protective area (18) in a direction (X) between said primary incoupler (14) and said primary outcoupler (16).

13. The document of claim 12 wherein said secondary outcoupler (16) comprises at least one line-shaped outcoupler element (42) in said protective area (18), wherein said line-shaped primary outcoupler (16) has a length (v) of at least 5 mm, in particular of at least 10 mm, and an width (w) of no more than 1 mm, in particular of no more than 0.5 mm, in particular of no more than 0.2 mm.

14. The document of any of the preceding claims wherein an overlap between the personalized information (22 - 28) in said protective area (18) and said personalized area (20) is at least 1 cm², in particular at least 2 cm².

15. The document of any of the preceding claims wherein, in a direction (X) between said primary incoupler (14) and said primary outcoupler (16), said protective area (18) has an extension (L) of at least 1 cm, in particular of at least 2 cm.

16. The document of any of the preceding claims wherein, in said personalized area (20), said protective area (18) overlaps with at least one of the following information carriers (22 - 28):
- writing (22a, 22b) representing name data of an owner of the document,
- writing (24) with a date and/or place of birth of the owner of the document,
- a photograph (26) of the owner of the document, and/or
- an electronic data carrier (28) carrying identification data of the owner.

17. The document of claim 16 wherein the protective area (18) overlaps with several of the information carriers (22 - 28).

18. The document of any of the claims 16 or 17 wherein the protective area (18) fully overlaps at least one such information carrier (22 - 28).

19. The document of any of the preceding claims having a first lightguide (12a) arranged above said personalized area (20) and a second lightguide (12b) arranged below said personalized area (20).

20. The document of claim 19 wherein the primary incouplers (14a, 14b) of the first and the second lightguides (12a, 12b) overlap.

21. The document of any of the claims 19 or 20 wherein the primary outcouplers (16a, 16b) of the first and second lightguides (12a, 12b) have a non-overlapping area.

22. The document of any of the claims 19 to 21 wherein the primary outcouplers (16a, 16b) of the first and second lightguides (12a, 12b) have complementary shapes.

23. The document of any of the preceding claims wherein said primary incoupler (14) and/or said primary outcoupler (16) is arranged completely within said personalized area (20).

24. The document of any of the preceding claims comprising a further security element (50), in addition to the incoupler and the outcoupler (14, 16), which is visible in reflection or in transmission, and in particular wherein said further security element (50) is at least one of an optically variable device, such as a diffractive structure, and non-variable markings, such as printed markings.

25. The document of any of the preceding claims comprising at least one window (52, 54) located at a location of said primary incoupler (14) and/or primary outcoupler (16).

## Patentansprüche

1. Ein Ausweisdokument umfassend
einen personalisierten Bereich (20), welcher personalisierte Informationen (22 - 28) trägt, die einen Besitzer des Dokuments identifizieren, und
einen optischen Lichtleiter (12) mit einem primären Einkoppler (14) und einem primären Auskoppler (16),
wobei der Lichtleiter (12) einen Schutzbereich (18) zwischen dem primären Einkoppler (14) und dem primären Auskoppler (16) bildet, wobei der Schutzbereich (18) zumindest einen Teil des personalisierten Bereichs (20) überlappt,
**dadurch gekennzeichnet, dass** der primäre Einkoppler (14) seitlich an einer ersten Seite des personalisierten Bereichs (20) angeordnet ist.

2. Das Dokument nach Anspruch 1, wobei der Lichtleiter (12) unterhalb des personalisierten Bereichs (20) angeordnet ist.

3. Das Dokument nach Anspruch 1, wobei der Lichtleiter (12) oberhalb des personalisierten Bereichs (20) angeordnet ist.

4. Das Dokument nach einem der vorhergehenden Ansprüche, wobei sich der Lichtleiter (12) vollständig über den personalisierten Bereich (20) erstreckt.

5. Das Dokument nach einem der vorhergehenden Ansprüche, wobei der primäre Einkoppler (14) entweder
- seitlich ausserhalb einer ersten Kante (34) des personalisierten Bereichs (20) angeordnet ist, oder
- überlappend mit der ersten Kante (34) des personalisierten Bereichs (20) angeordnet ist,
wobei die erste Kante (34) eine Kante des personalisierten Bereichs (20) auf der ersten Seite ist.

6. Das Dokument nach einem der vorangehenden Ansprüche, wobei der primäre Auskoppler (16) seitlich an einer zweiten Seite des personalisierten Bereichs (20) angeordnet ist.

7. Das Dokument nach Anspruch 6, wobei der primäre Auskoppler (16) entweder
- seitlich außerhalb einer zweiten Kante (36) des personalisierten Bereichs (20) angeordnet ist, oder
- überlappend mit der zweiten Kante (36) des personalisierten Bereichs (20) angeordnet ist,
wobei die zweite Kante (36) eine Kante des personalisierten Bereichs (20) auf der zweiten Seite ist.

8. Das Dokument nach einem der Ansprüche 4 oder 5 und nach einem der Ansprüche 6 oder 7, wobei sich die erste Seite von der zweiten Seite unterscheidet, und insbesondere, wobei die erste Seite der zweiten Seite gegenüberliegt.

9. Das Dokument nach einem der vorhergehenden Ansprüche, wobei der primäre Einkoppler (14) und/oder der primäre Auskoppler (16) nicht mehr als 20 %, insbesondere nicht mehr als 10 %, des personalisierten Bereichs (20) überlappen.

10. Das Dokument nach einem der vorangehenden Ansprüche, wobei der primäre Einkoppler (14) und/oder der primäre Auskoppler (16) den personalisierten Bereich (20) nicht überlappt/überlappen.

11. Das Dokument nach einem der vorhergehenden Ansprüche, wobei der Lichtleiter (12) in dem Schutzbereich (18) und/oder dem personalisierten Bereich (20) keine Einkopplungs- und/oder keine Auskopplungsstrukturen aufweist.

12. Das Dokument nach einem der vorhergehenden Ansprüche, wobei der Lichtleiter (12) eine sekundäre Auskoppelstruktur (40) in dem Schutzbereich (18) aufweist, wobei
- die sekundäre Auskopplungsstruktur (40) nicht mehr als 20 %,
insbesondere nicht mehr als 10 %, des Schutzbereichs (18) bedeckt und
- für jeden Punkt (P) in dem genannten Schutzbereich (18) eine kürzeste Entfernung (d) zu dem sekundären Auskoppler (40) kleiner als L/3 ist, wobei L eine Ausdehnung des Schutzbereichs (18) in einer Richtung (X) zwischen dem primären Einkoppler (14) und dem primären Auskoppler (16) ist.

13. Das Dokument nach Anspruch 12, wobei der sekundäre Auskoppler (16) mindestens ein linienförmiges Auskoppelelement (42) in dem Schutzbereich (18) aufweist, wobei der linienförmige primäre Auskoppler (16) eine Länge (v) von mindestens 5 mm, insbesondere von mindestens 10 mm, aufweist und eine Breite (w) von nicht mehr als 1 mm, insbesondere von nicht mehr als 0,5 mm, insbesondere von nicht mehr als 0,2 mm.

14. Das Dokument nach einem der vorhergehenden Ansprüche, wobei eine Überlappung zwischen der personalisierten Information (22 - 28) in dem Schutzbereich (18) und dem personalisierten Bereich (20) mindestens 1 cm² beträgt, insbesondere mindestens 2 cm².

15. Das Dokument nach einem der vorhergehenden Ansprüche, wobei der Schutzbereich (18) in einer Richtung (X) zwischen dem primären Einkoppler (14) und dem primären Auskoppler (16) eine Ausdehnung (L) von mindestens 1 cm, insbesondere von mindestens 2 cm, aufweist.

16. Das Dokument nach einem der vorhergehenden Ansprüche, wobei der Schutzbereich (18) in dem personalisierten Bereich (20) mit mindestens einem der folgenden Informationsträger (22-28) überlappt:
- Schriftzug (22a, 22b), welcher Namensdaten eines Besitzers des Dokuments repräsentiert,
- Schriftzug (24) mit Geburtsdatum und/oder Geburtsort des Besitzers des Dokuments
- eine Fotografie (26) des Besitzers des Dokuments, und/oder
- ein elektronischer Datenträger (28), welcher Identifikationsdaten des Besitzers trägt.

17. Das Dokument nach Anspruch 16, wobei der Schutzbereich (18) mit mehreren der Informationsträger (22 - 28) überlappt.

18. Das Dokument nach einem der Ansprüche 16 oder 17, wobei die Schutzbereich (18) mindestens einen dieser Informationsträger (22 - 28) vollständig überlappt.

19. Das Dokument nach einem der vorhergehenden Ansprüche mit einem ersten Lichtleiter (12a), der oberhalb des personalisierten Bereichs (20) angeordnet ist, und einem zweiten Lichtleiter (12b), der unterhalb des personalisierten Bereichs (20) angeordnet ist.

20. Das Dokument nach Anspruch 19, wobei sich die primären Einkoppler (14a, 14b) des ersten und des zweiten Lichtleiters (12a, 12b) überlappen.

21. Das Dokument nach einem der Ansprüche 19 oder 20, wobei die primären Auskoppler (16a, 16b) des ersten und zweiten Lichtleiters (12a, 12b) einen nicht überlappenden Bereich aufweisen.

22. Das Dokument nach einem der Ansprüche 19 bis 21, wobei die primären Auskoppler (16a, 16b) des ersten und zweiten Lichtleiters (12a, 12b) komplementäre Formen aufweisen.

23. Das Dokument nach einem der vorhergehenden Ansprüche, wobei der primäre Einkoppler (14) und/oder der primäre Auskoppler (16) vollständig innerhalb des personalisierten Bereichs (20) angeordnet ist.

24. Das Dokument nach einem der vorhergehenden Ansprüche umfassend ein weiteres Sicherheitselement (50), zusätzlich zu dem Einkoppler und dem Auskoppler (14, 16), welches in Reflexion oder in Transmission sichtbar ist, und insbesondere, wobei das weitere Sicherheitselement (50) mindestens eines von einer optisch variablen Vorrichtung, wie einer diffraktiven Struktur, und nicht variablen Markierungen, wie gedruckten Markierungen, ist.

25. Das Dokument nach einem der vorhergehenden Ansprüche umfassend mindestens ein Fenster (52, 54), welches sich an einer Stelle des primären Einkopplers (14) und/oder des primären Auskopplers (16) befindet.

## Revendications

1. Un document d'identification ayant
une zone personnalisée (20) portant des informations personnalisées (22 - 28) identifiant un propriétaire du document, et
un guide d'onde optique (12) comprenant un coupleur primaire d'entrée (14) et un coupleur de sortie primaire (16),
dans lequel le guide d'onde optique (12) forme une zone de protection (18) entre ledit coupleur primaire d'entrée (14) et ledit coupleur primaire de sortie (16), ladite zone de protection (18) chevauchant au moins une partie de la zone personnalisée (20),
**caractérisé en ce que** le coupleur primaire d'entrée (14) est disposé latéralement sur un premier côté de ladite zone personnalisée (20).

2. Le document selon la revendication 1, dans lequel le guide d'onde optique (12) est disposé en dessous de la zone personnalisée (20).

3. Le document selon la revendication 1, dans lequel le guide d'onde optique (12) est disposé au-dessus de la zone personnalisée (20).

4. Le document selon l'une des revendications précédentes, dans lequel le guide d'onde optique (12) s'étend entièrement sur la zone personnalisée (20).

5. Le document selon l'une des revendications précédentes, dans lequel le coupleur primaire d'entrée (14) est soit
- disposé latéralement à l'extérieur d'un premier bord (34) de la zone personnalisée (20), ou
- disposé en chevauchant le premier bord (34) de la zone personnalisée (20),
le premier bord (34) étant un bord de la zone personnalisée (20)
sur ledit premier côté.

6. Le document selon l'une des revendications précédentes, dans lequel le coupleur primaire de sortie (16) est disposé latéralement sur un deuxième côté de la zone personnalisée (20).

7. Le document selon la revendication 6, dans lequel le coupleur primaire de sortie (16) est
- disposé latéralement à l'extérieur d'un deuxième bord (36) de la zone personnalisée (20),
- chevauchant le deuxième bord (36) de la zone personnalisée (20),
dans lequel le deuxième bord (36) est un bord de la zone personnalisée (20) sur ledit deuxième côté.

8. Le document selon l'une des revendications 4 ou 5 et selon l'une des revendications 6 ou 7, dans lequel le premier côté est différent du deuxième côté, et notamment dans lequel le premier côté est opposée au deuxième côté.

9. Le document selon l'une des revendications précédentes, dans lequel le coupleur primaire d'entrée (14) et/ou le coupleur primaire de sortie (16) ne chevauchent pas plus de 20 %, en particulier pas plus de 10 %, de la zone personnalisée (20).

10. Le document selon l'une des revendications précédentes, dans lequel le coupleur primaire d'entrée (14) et/ou le coupleur primaire de sortie (16) ne chevauche(nt) pas la zone personnalisée (20).

11. Le document selon l'une des revendications précédentes, dans lequel le guide d'onde optique (12) ne comporte pas de structures de couplage d'entrée et/ou de sortie dans la zone de protection (18) et/ou la zone personnalisée (20).

12. Le document selon l'une des revendications précédentes, dans lequel le guide d'onde optique (12) comprend une structure secondaire de sortie (40) dans la zone de protection (18), dans laquelle
- la structure secondaire de sortie (40) ne dépasse pas 20 %, en particulier pas plus de 10 %, de la zone de protection (18), et
- pour chaque point (P) dans ladite zone de protection (18), une distance la plus courte (d) au coupleur secondaire de sortie (40) est inférieure à L/3, où L est une extension de la zone de protection (18) dans une direction (X) entre le coupleur primaire d'entrée (14) et le coupleur primaire de sortie (16).

13. Le document selon la revendication 12, dans lequel le coupleur secondaire de sortie (16) comprend au moins un élément de découplage linéaire (42) dans la zone de protection (18), dans lequel le coupleur primaire d'entrée en forme de ligne (16) a une longueur (v) d'au moins 5 mm, en particulier d'au moins 10 mm, et une largeur (w) non supérieure à 1 mm, en particulier non supérieure à 0,5 mm, en particulier non supérieure à 0,2 mm.

14. Le document selon l'une des revendications précédentes, dans lequel un chevauchement entre l'information personnalisée (22-28) dans la zone de protection (18) et la zone personnalisée (20) est d'au moins 1 cm², en particulier d'au moins 2 cm².

15. Le document selon l'une des revendications précédentes, dans lequel la zone de protection (18) présente une extension (L) d'au moins 1 cm, notamment d'au moins 2 cm, dans une direction (X) entre le coupleur primaire d'entrée (14) et le coupleur primaire de sortie (16).

16. Le document selon l'une des revendications précédentes, dans lequel la zone de protection (18) se superpose, dans la zone personnalisée (20), à au moins l'un des portuers d'information (22-28) suivants :
- une inscription (22a, 22b) représentant des données nominatives d'un propriétaire du document,
- une inscription (24) de la date et/ou du lieu de naissance du propriétaire du document
- une photographie (26) du propriétaire du document, et/ou
- un porteur de données électronique (28) qui porte des données d'identification du propriétaire.

17. Le document selon la revendication 16, dans lequel la zone de protection (18) recouvre plusieurs des porteurs d'information (22-28).

18. Le document selon l'une des revendications 16 ou 17, dans lequel la zone de protection (18) recouvre entièrement au moins un de ces portuers d'information (22-28).

19. Le document selon l'une des revendications précédentes, comprenant un premier guide d'onde optique (12a) disposé au-dessus de la zone personnalisée (20) et un deuxième guide d'onde optique (12b) disposé en dessous de la zone personnalisée (20).

20. Le document selon la revendication 19, dans lequel les coupleurs primaires d'entrée (14a, 14b) des première et deuxième fibres optiques (12a, 12b) se chevauchent.

21. Le document selon l'une des revendications 19 ou 20, dans lequel les coupleurs primaires de sortie (16a, 16b) des premier et deuxième guides d'onde optique (12a, 12b) présentent une zone non chevauchante.

22. Le document selon l'une des revendications 19 à 21, dans lequel les coupleurs primaires de sortie (16a, 16b) des premier et deuxième guides d'onde optique (12a, 12b) ont des formes complémentaires.

23. Le document selon l'une des revendications précédentes, dans lequel le coupleur primaire d'entrée (14) et/ou le coupleur primaire de sortie (16) est/sont entièrement disposé(s) à l'intérieur de la zone personnalisée (20).

24. Le document selon l'une des revendications précédentes, comprenant un autre élément de sécurité (50), en plus du coupleur d'entrée et du coupleur de sortie (14, 16), qui est visible en réflexion ou en transmission, et en particulier dans lequel l'autre élément de sécurité (50) est au moins l'un d'un dispositif optiquement variable, tel qu'une structure diffractive, et des marques non variables, telles que des marques imprimées.

25. Le document selon l'une des revendications précédentes, comprenant au moins une fenêtre (52, 54) située à un endroit du coupleur primaire d'entrée (14) et/ou du coupleur primaire de sortie (16).
